# EUROPÄISCHE PATENTSCHRIFT

(11) **EP 0 528 261 B1**
(45) Veröffentlichungstag und Bekanntmachung des Hinweises auf die Patenterteilung: **31.01.1996**
(21) Anmeldenummer: 92113294.0
(22) Anmeldetag: 05.08.1992
(51) Int. Cl.: F16L 47/02, B29C 65/34

(54) **Anordnung mit einer Stutzenarmatur**
Arrangement with a branch fitting
Installation avec un embout de dérivation

(30) Priorität: 19.08.1991 DE 4127350
(43) Veröffentlichungstag der Anmeldung: 24.02.1993
(73) Patentinhaber: FRIATEC AG KERAMIK- UND KUNSTSTOFFWERKE, D-68229 Mannheim (DE)
(72) Erfinder: Lang, Werner, Dipl.-Ing., W-6832 Hockenheim (DE); Unger, Johann, W-6922 Meckesheim (DE)
(74) Vertreter: Klose, Hans, Dipl.-Phys.

(56) Entgegenhaltungen:
- EP-A- 0 093 328
- EP-A- 0 378 406
- CH-A- 528 697
- DE-B- 1 055 305
- DE-U- 1 720 389
- GB-A- 2 186 524

## Beschreibung

Die Erfindung bezieht sich auf eine Anordnung mit einer Stutzenarmatur gemäß den im Oberbegriff des Patentanspruchs 1 angegebenen Merkmalen.

Aus der EP 378 406 A2 ist eine derartige Anordnung bekannt, deren Heizwendel nicht in der Innenfläche des Stutzens, sondern innerhalb einer nicht vernetzten Schicht angeordnet ist. Im übrigen besteht diese Stutzenarmatur aus vernetztem Polyolefin, damit auch beim Einwirken von heißem Wasser eine geforderte Formbeständigkeit eingehalten wird. In besonderen Verfahrensschritten muß die Heizwendel zunächst in die nicht vernetzte Schicht eingebracht und von dieser umschlossen werden. Des weiteren erfordert die Anordnung der nicht vernetzten Schicht zusammen mit der Heizwendel in dem Stutzen einen zusätzlichen Fertigungsaufwand und es sind weitere Maßnahmen zur Ausrichtung und definierten Festlegung dieser nicht vernegtzten Schicht im Stutzen erforderlich. Es besteht die Gefahr, daß die Schicht mit der Heizwicklung aus der Ringnut oder Hinterschneidung des Stutzens gelöst wird oder insoweit eine Undichtigkeit eintritt. Es ist nicht ersichtlich, mit welchen Mitteln das mit der Stutzenarmatur zu verbindende Rohr anzubohren ist.

Ferner ist aus der DE 38 30 395 C1 eine Anbohrarmatur bekannt, welche als Sattelstück ausgebildet ist und auf der Innenfläche einer ersten Halbschale die Heizwendel zur Verbindung mit der Rohraußenfläche enthält. Vor dem Schweißen erfolgt eine Festlegung mittels einer zweiten Halbschale und entsprechenden Schrauben oder sonstigen Verbindungselementen auf der Rohraußenfläche. Der zum Rohr orthogonal angebrachte Stutzen dient zur Befestigung eines Anbohrgerätes, welches einen Bohrer zum Anbohren des Rohres enthält. Nach erfolgter Anbohrung wird der Bohrer in den Stutzen zurückbewegt, um den Weg vom inneren Stutzenteil in einen orthogonal zum Stutzen angeordneten Anschlußstutzen und von dort in die angeschlossene Abzweigleitung freizugeben. Es erfolgt eine doppelte Umlenkung des Mediums, und zwar zunächst orthogonal zur Längsachse der Rohrleitung radial nach außen in den Stutzen und von dort orthogonal zur Längsachse des Stutzens in den Anschlußstutzen. Der Stutzen weist insgesamt eine vergleichsweise große Bauhöhe auf und ermöglicht keinen direkten Anschluß einer Abzweigleitung. Ist diese Armatur mit der Rohrleitung im Boden verlegt, so ist der Stutzen regelmäßig vertikal und der Anschlußstutzen horizontal ausgerichtet. Werden im Bereich der Rohrleitung oder an dieser Baumaßnahmen erforderlich, so besteht das erhebliche Risiko, daß in der Praxis, insbesondere mit einem Bagger, der vertikal nach oben abstehende Stutzen erfaßt wird und erhebliche Schäden verursacht werden.

Schließlich ist aus der DE 88 12 134 U1 ein Stopfensetzgerät bekannt, welches am unteren Ende seines Gehäuses ein Außengewinde aufweist. Das Stopfensetzgerät wird mit dem genannten Außengewinde in ein zugeordnetes Innengewinde eines Sperrschiebers geschraubt, welcher gegenüberliegend ein zweites Innengewinde besitzt. Über dieses Innengewinde wird der Sperrschieber auf ein Außengewinde eines Rohransatzes geschraubt. Anstelle des Stopfensetzgerätes kann in den genannten Sperrschieber bedarfsweise ein Anbohrgerät geschraubt werden, um das Rohr für das Einsetzen des Stopfens vorzubereiten. Zielsetzung des bekannten Stopfensetzgerätes ist es, ein Loch der Rohtleitung zu verschließen, während die vorliegende Stutzenarmatur zum Anschluß einer Abzweigleitung auszubilden ist.

Daher liegt der Erfindung die Aufgabe zugrunde, die Anordnung mit einer Stutzen-armatur der genannten Art mit geringem konstruktiven Aufwand dahingehend weiterzubilden, daß bei reduzierten Außenabmessungen ein problemloser Anschluß einer Abzweigleitung erfolgen kann. Die Stutzenarmatur soll einen geringen Materialund Gewichtsbedarf erfordern und die Herstellung einer funktionssicheren Verbindung zwischen der Rohrleitung und der Abzweigleitung ermöglichen. Die Handhabung bei der Montage soll erleichtert, die Anzahl der Bauteile und die Gefahr von Beschädigungen reduziert werden.

Die Lösung dieser Aufgabe erfolgt nach den kennzeichnenden Merkmalen des Patentanspruchs 1.

Die vorgeschlagene Stutzenarmatur der Anordnung zeichnet sich bei funktionssicherer Konstruktion durch geringe Außenabmessungen aus und ermöglicht den direkten Anschluß einer Abzweigleitung an den Stutzen. Es erfolgt hierbei mit wenigen Bauteilen und mit geringem Fertigungsaufwand nur eine einmalige Umlenkung des Mediums aus der Richtung der Rohrlängsachse in Richtung der bevorzugt orthögöhal hierzu angeordneten Stutzenachse. Die Stutzenarmatur weist kompakte Außenabmessungen auf und ermöglicht eine einfache Handhabung bei der Montage und den erforderlichen Arbeiten zum Anschluß einer Abzweigleitung an die Rohrleitung. Der Stutzen enthält direkt in seiner Innenfläche eine Heizwendel, welche eine funktionssichere und unmittelbare Verbindung mit der Abzweigleitung ermöglicht. Für die Heizwendel ist keine zusätzliche Schicht erforderlich und der Stuzten besteht durchgehend bei vergleichsweise kleiner Wandstärke aus dem gleichen Werkstoff. Die Heizwendel ist in die Innenfläche des Stutzens eingebettet und steht beim Schweißen in unmittelbarem Kontakt mit der Außenfläche des Rohres bzw. der Abzweigleitung. Die Stutzenlänge ist auf ein Minimum reduziert, zumal das der Rohrlängsachse zugewandte Ende der Heizwendel- oder Schweißwicklung unter Berücksichtigung einer zum Schweißen in zweckmäßiger Weise einzuhaltenden kalten Zone bis an den äußeren Scheitel der Halbschale oder des Sattelstücks heranreichen kann. Der Stutzen weist in zweckmäßiger Weise außen eine Zentrierfläche für ein Anbohrgerät auf.

Mit der Zentrierfläche, welche insbesondere Bestandteil eines Zentrierbundes ist, wird eine exakte Ausrichtung des Anbohrgerätes auf dem Stutzen sichergestellt, um eine Beschädigung der in der Innenfläche des Stutzens weitgehend freiliegenden Heizwendel durch den Bohrer sicher zu verhindern. Es wird somit vermieden, daß infolge einer Beschädigung der Heizwendel die Schweißverbindung mit der Abzweigleitung fehlerhaft wird, zumal derartige Fehler oftmals nicht unmittelbar nach der Herstellung der Verbindung, sondern erst nach gewisser Zeit nach außen hin in Erscheinung treten, wenn die Rohrleitung insbesondere im Erdreich verlegt ist. Aufgrund der exakten Ausrichtung des Anbohrgerätes über den Zentrierbund werden derartige Spätschäden, welche nur mit einem erheblichen Aufwand beseitigt werden können, mit hoher Sicherheit vermieden.

Der genannte Zentrierbund kann insbesondere ein Anschlußgewinde für das Anbohrgerät und/oder eine Zentrier- oder Anschlagfläche enthalten, damit das Anbohrgerät exakt mit der Stutzenachse fluchtend auf der Stutzenarmatur befestigt werden kann. Diese Stutzenarmatur ermöglicht in besonders zweckmäßiger Weise die Herstellung von großen Anbohrdurchmessern, so daß Strömungsverluste zwischen der Rohrleitung und der Abzweigleitung auf ein Minimum reduziert werden. Die Stutzenarmatur ermöglicht eine anwenderfreundliche Montage und Verarbeitung auf der Baustelle, wobei nur wenige, einfache Hilfswerkzeuge bei der Verarbeitung erforderlich sind.

Besondere Ausgestaltungen und Weiterbildungen sind in den Unteransprüchen und der nachfolgenden Beschreibung angegeben.

Die Erfindung wird nachfolgend anhand der in der Zeichnung dargestellten Ausführungsbeispiele näher erläutert. Es zeigt:
- Fig. 1: eine seitliche Ansicht der Stutzenarmatur, welche teilweise auch geschnitten dargestellt ist,
- Fig. 2, 3: alternative Ausführungen der Zentrierflächen bzw. Außengewinde,
- Fig. 4: einen Schnitt durch die Anordnung, mit der Stutzenarmatur quer zur Rohrlängsachse in der normalen Einbauposition,
- Fig. 5: eine Ausgestaltung zum Anschluß eines Hydranten,
- Fig. 6: eine Ausgestaltung, gemäß welcher die Abzweigleitung den gleichen Durchmesser wie die Rohrleitung aufweist.

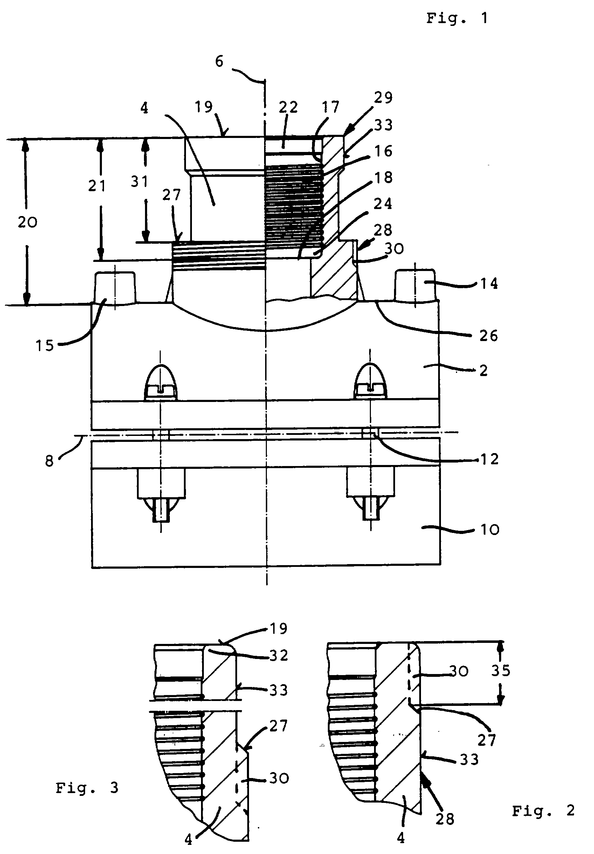

Fig. 1 zeigt die Stutzenarmatur mit einem Sattelstück 2 und einem Stutzen 4, dessen Achse 6 orthogonal zur Längsachse 8 eines hier nicht weiter dargestellten Rohres verläuft. Das Sattelstück 2 und der Stutzen 4 bilden ein einteiliges Formstück, wobei auf der Innenfläche des Sattelstücks 2 in bekannter Weise eine Heizspirale zum Verschweißen mit dem genannten Rohr vorgesehen ist. Das Sattelstück 2 ist aus einer Halbschale ausgebildet und zusammen mit einer zweiten Halbschale 10 und Schrauben 12 kann diese Stutzenarmatur auf der Außenfläche des Rohres festgelegt werden. Das Sattelstück 2 enthält zwei Buchsen 14, 15, in welche die Enden der genannten Heizspirale geführt sind, um mittels Steckern die elektrische Verbindung zu einem Schweißgerät herstellen zu können.

Der Stutzen 4 dient zum direkten Anschluß einer Abzweigleitung koaxial zur Stutzenachse 6. Der Stutzen 4 ist als eine Elektroschweißmuffe ausgebildet, welche innen eine Heizwendel 16 enthält und in welche das Rohrende der Abzweigleitung direkt eingeführt werden kann. Die Heizwendel 16 ist direkt in die Innenfläche 17 des Stutzens 4 eingebettet und liegt beim Verschweißen mit der Abzweigleitung unmittelbar an deren Außenfläche an. Der Stutzen und das Sattelstück sind einteilig ausgebildet und bestehen aus dem gleichen schweißbaren Kunststoff, in welchen die Heizwendel 16 ohne zusätzliche Zwischenschichten oder dergleichen unmittelbar eingebettet ist. Somit kann der Stutzen 4 eine vergleichsweise geringe Wanddicke aufweisen, wodurch nicht unerhebliche Material- und Gewichtseinsparungen ermöglicht werden. Der Stutzen 4 weist innen einen Ringbund 18 als Anschlag vor allem für ein beim Anbohren zum Einsatz gelangendes Schutzrohr und ferner für das einzuschiebende Rohrende auf. Der Stutzen 4 endet in einer planen Stirnfläche 19, welche zweckmäßig in einer Radialebene bezüglich der Stutzenachse 6 angeordnet ist. Der Stutzen 4 weist in Richtung der Stutzenachse 6 eine Höhe 20 auf, welche wesentlich kleiner ist als die Höhe von vorbekannten Stutzenarmaturen oder Anbohrarmaturen. Die Höhe 20 ist im wesentlichen gleich groß wie die erforderliche axiale Länge der Heizwendel 16 zusätzlich jeweils an den Enden anschließenden kalten Zonen 22, 24, welche für eine ordnungsgemäße Verschweißung zweckmäßigerweise vorgesehen sind. Der innere Ringbund 18 ist in einer Tiefe 21 von der Stirnfläche 19 entfernt angeordnet und diese Tiefe ist kleiner als die Höhe 20 des Stutzens 4. Die Heizwendel 16 endet in Richtung zur Längsachse 8 in der Nähe der Scheitellinie 26 des Sattelstücks 2. Im Bereich dieser Scheitellinie 26 bzw. der durch diese Scheitellinie 26 orthogonal zur Stutzenachse 6 verlaufenden Ebene, ist bevorzugt der Ringbund 18 angeordnet.

Der Stutzen 4 weist außen einen Zentrierbund 28 auf, welcher hier ein Außengewinde 30 zum unmittelbaren Festschrauben eines Anbohrgerätes enthält. Der Zentrierbund 28 dient zur koaxialen Ausrichtung eines Anbohrgerätes, mit welchem nach dem Aufschweißen der Stutzenarmatur auf das Rohr, dieses aufgebohrt werden kann. Der Zentrierbund 28 besitzt eine Anschlagfläche 27, welche ebenso wie die Stirnfläche 19 in einer Radialebene bezüglich der Stutzenachse 6 liegt. Die Anschlagfläche 27 weist zur Stirnfläche 19 einen Abstand 31 auf, welcher kleiner ist als die Tiefe 21 zum inneren Ringbund 18. Der äußere Ringbund 28 dient zum Zentrieren des Anbohrgerätes, welches somit zuverlässig koaxial zur Stutzenachse 6 ausgerichtet ist, so daß eine Beschädigung der direkt in die Innenfläche eingebetteten Heizwendel 16 insbesondere durch den Bohrer des Anbohrgerätes sicher vermieden wird.

Die Rohrleitung kann ggfs. auch das unter Druck stehende Medium, insbesondere Erdgas oder Wasser, enthalten, wobei in bekannter Weise durch zusätzliche Absperrelemente das unerwünschte Ausströmen des Mediums verhindert wird. Anstelle der Befestigung des Anbohrgerätes über das Außengewinde kann allgemein ein Zentrierbund mit einer entsprechenden Zentrierfläche außen am Stutzen 4 vorgesehen sein, wobei eine Bänderbefestigung des Anbohrgerätes vorgenommen wird. Es versteht sich, daß das Außengewinde oder Zentrierflächen oder dergleichen mit zugeordneten Gewinden oder Flächen des Bohrgerätes korrespondieren, damit die erforderliche koaxiale Ausrichtung des Anbohrgerätes bezüglich des Stutzens 4 gewährleistet wird.

Ferner weist der Stutzen 4 im Bereich der axialen Stirnfläche 19 einen zusätzlichen Zentrierbund 29 und/oder eine Zentrierfläche 33 für das erwähnte Anbohrgerät auf. Dieser Zentrierbund 29 liegt zu dem anderen Zentrierbund 28 und/oder dem Außengewinde 30 axial beabstandet, so daß insgesamt eine sehr exakte koaxiale Ausrichtung des Anbohrgeräts bezüglich der Stutzenachse 6 sichergestellt wird. Im Rahmen der Erfindung muß das erläuterte Außengewinde 30 zur Befestigung des Anbohrgerätes nicht zwingend auch Bestandteil eines Zentrierbundes sein, zumal die axiale Beabstandung zwischen Zentrierbund einerseits und Außengewinde 30 andererseits eine sehr exakte Ausrichtung ermöglicht.

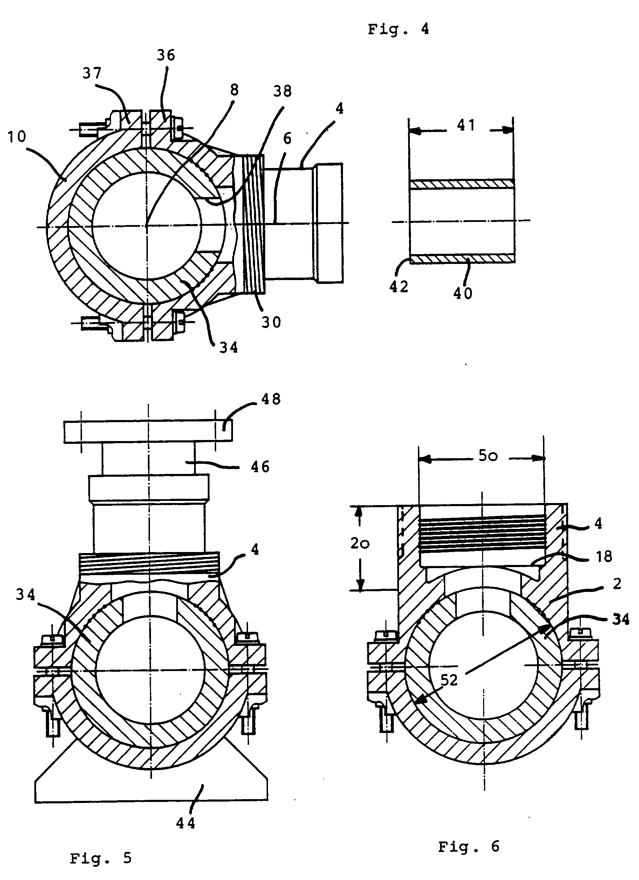

Fig. 2 und 3 zeigen Ausgestaltungen des Zentrierbundes 28 mit dem zugeordneten Außengewinde 30. Gemäß Fig. 2 ist das Außengewinde 30 am freien Ende 32 des Stutzens 4 vorgesehen. Das Außengewinde 30 besitzt eine Gewindelänge 35, welche derart vorgegeben ist, daß das Anbohrgerät fest mit dem Stutzen 4 verbunden werden kann. Die axial anschließende Zentrierfläche 33 gewährleistet die exakte koaxiale Ausrichtung. Andererseits kann erfindungsgemäß bei entsprechend großer Vorgabe der Gewindelänge das Außengewinde 30 unmittelbar die Zentrierfläche bilden, wobei im Zusammenwirken mit der Anschlagfläche 27 die zur Stutzenachse 6 fluchtende Ausrichtung des Anbohrgerätes erreicht wird. Hingegen beginnt gemäß Fig. 3 das Außengewinde 30 etwa in der Mitte der auf die erwähnte Scheitellinie bezogene Länge des Stutzens 4 und erstreckt sich in Richtung zum hier nicht weiter dargestellten Sattelstück 2. Bei dieser Ausgestaltung wird zusätzlich die zylindrische Außenfläche im Bereich des freien Endes 32 als Zentrierfläche 33 für das Anbohrgerät genutzt.

Fig. 4 zeigt die Stutzenarmatur in der normalen Einbauposition, in welcher der Stutzen 4 horizontal angeordnet ist. Die Stutzenachse 6 und die Längsachse 8 des Rohres 34 liegen in der gleichen horizontalen Ebene. Es stehen hierbei lediglich die Flansche 36, 37 des Sattelstücks 2 vertikal nach oben etwas ab, so daß die Gefahr einer Beschädigung der Stutzenarmatur bei eventuellen Arbeiten im Graben der Rohrleitung praktisch ausgeschlossen ist. Das durch das Rohr 34 strömende Medium gelangt mit nur einer einzigen Umlenkung um 90° in die koaxial zur Stutzenachse 6 im Stutzen 4 angeschweißte Abzweigleitung. Die Abzweigleitung liegt somit in der gleichen horizontalen Ebene wie das Rohr 34 bzw. der Rohrleitung, aus welcher das Medium in die Abzweigleitung strömt.

In dem Rohr 34 ist die Bohrung 38 zu erkennen, welche mittels des bereits erwähnten Anbohrgerätes in das Rohr 34 eingebracht worden ist. Damit beim Anbohren die in der Innenfläche des Stutzens 4 liegende Heizwendel nicht beschädigt wird, wird erfindungsgemäß vor dem Aufschrauben des Anbohrgerätes auf das Außengewinde 30 ein kurzes Schutzrohr 40 in den Stutzen 4 eingesetzt. Dieses Schutzrohr 40 besitzt eine Länge 41, welche zumindest im wesentlichen gleich groß ist wie die Tiefe 21. Die axiale Stirnfläche 42 des Schutzrohres wird an dem bereits erwähnten Ringbund im Inneren des Stutzens 4 zur Anlage gebracht. Da die Länge 41 zumindest näherungsweise gleich groß ist wie die Tiefe 21 und bevorzugt aber auch länger sein kann und somit das Schutzrohr 40 über die Stirnfläche 19 hervorsteht, wird einerseits der korrekte Sitz des Schutzrohres 40 in einfacher Weise kontrollierbar und andererseits eine Beschädigung der in der Innenfläche zumindest teilweise freiliegenden Heizwendel durch den Bohrer des Anbohrgerätes funktionssicher verhindert. Nach dem Einbringen der Bohrung 38 in das Rohr 34 wird das Schutzrohr 40 ebenso wie das Anbohrgerät vom Stutzen 4 abgezogen, so daß nachfolgend das Rohrende der Abzweigleitung in den Stutzen 4 eingeschoben und mittels der unbeschädigt gebliebenen Heizwendel verschweißt werden kann.

Fig. 5 zeigt eine besondere Ausgestaltung der Stutzenarmatur, gemäß welcher die zweite Halbschale eine Grundplatte 44 zur Bildung eine Hydrantenfußes aufweist. Der Stutzen 4 ist hierbei vertikal ausgerichtet und in ihm ist von der Abzweigleitung ein Anschlußstück 46 mit einem Flansch 48 entsprechend dem oben erläuterten Rohrende durch Schweißen fest verbunden. An dem Flansch 48 kann problemlos ein Hydrant angeschlossen werden. Auch bei dieser Ausführungsform ist maßgebend, daß das durch das Rohr 34 strömende Medium nur einmal umgelenkt wird und das Anschlußteil 46 koaxial zur Stutzenachse 6 ausgerichtet ist.

Die in Fig. 6 gezeigte Ausführungsform der Stutzenarmatur ermöglicht den Anschluß von Abzweigleitungen mit dem gleichen Rohrdurchmesser wie das Rohr 34. Die Heizwendel 16 reicht bis in die Ebene der Scheitellinie 26 der Außenfläche des Sattelstücks 2. Der Innendurchmesser 50 des Stutzens 4 bzw. der dort vorgesehenen Heizwendel 6 entspricht unter Berücksichtigung der üblichen Toleranzen dem Außendurchmesser 52 des Rohres 34. Gleichwohl ist bei dieser besonderen Ausgestaltung die Höhe 20 des Stutzens 4 im Vergleich mit vorbekannten Armaturen, bei welchen die Abzweigleitung orthogonal zum Stutzen verläuft, sehr gering. Der als Anschlag für das einzuschiebende Rohrende dienende Ringbund 18 liegt bei dieser Ausgestaltung in der Ebene, in welcher die Scheitellinie 26 verläuft.

### Bezugszeichen

- 2: Sattelstück
- 4: Stutzen
- 6: Stutzenachse
- 8: Längsachse eines Rohres
- 10: zweite Halbschale
- 12: Schraube
- 14, 15: Buchse
- 16: Heizwendel
- 17: Innenfläche
- 18: Ringbund
- 19: Stirnfläche
- 20: Höhe von 4
- 21: Tiefe von 18
- 22, 24: kalte Zone
- 26: Scheitellinie
- 27: Anschlagfläche
- 28, 29: Zentrierbund
- 30: Außengewinde
- 31: Abstand
- 32: freies Ende von 4
- 33: Zentrierfläche
- 34: Rohr
- 35: Gewindelänge
- 36, 37: Flansch
- 38: Bohrung
- 40: Schutzrohr
- 41: Länge von 40
- 42: Stirnfläche von 40
- 44: Grundplatte
- 46: Anschlußteil
- 48: Flansch
- 50: Innendurchmesser von 4
- 52: Außendurchmesser von 34

## Patentansprüche

1. Anordnung mit einer Stutzenarmatur, welche mittels eines Sattelstücks (2) auf einer Außenfläche eines Rohres (34), insbesondere durch Schweißen, befestigbar ist, enthaltend einen zur Längsachse (8) des Rohres (34) bevorzugt orthogonalen Stutzen (4), welcher eine Heizwendel (16) aufweist, mittels welcher eine Abzweigleitung koaxial zur Stutzenachse (6) mit dem Stutzen (4) verbindbar ist,
dadurch gekennzeichnet, daß die Heizwendel (16) direkt in der Innenfläche (17) des Stutzens (4) angeordnet ist,
daß der Stutzen (4) außen eine Zentrier- oder eine Anschlagfläche (33, 27) zum koaxialen Ausrichten eines Anbohrgerätes bezüglich der Stutzenachse (6) aufweist,
und daß ein Schutzrohr (40) vorgesehen ist, welches vor dem Verbinden des Anbohrgerätes mit dem Stutzen (4) in diesen einführbar ist und mit welchen beim Anbohren des Rohres (34) ein definierter Abstand zwischen der Außenfläche des durch das freie Ende des Schutzrohres (40) eingeführten Bohrers und der Heizwendel (16) vorgegeben wird, wobei das Schutzrohr (40) nach dem Anbohren des Rohres (34) ebenso wie das Anbohrgerät vom Stutzen (4) entfernbar ist.

2. Anordnung nach Anspruch 1, dadurch gekennzeichnet, daß die Zentrier- oder Anschlagfläche (33, 27) an einem Zentrierbund (28, 29) des Stutzens (4) angeordnet ist.

3. Anordnung nach Anspruch 2, dadurch gekennzeichnet, daß der Zentrierbund (28, 29) ein Außengewinde (30) aufweist.

4. Anordnung nach einem der Ansprüche 1 bis 3, dadurch gekennzeichnet, daß die Heizwendel (16) zumindest teilweise über die Innenfläche (17) des Stutzens (4) zur direkten Anlage an der Außenfläche eine Abzweigleitung vorsteht.

5. Anordnung nach einem der Ansprüche 1 bis 4, dadurch gekennzeichnet, daß das Schutzrohr (40) eine Länge (41) aufweist, welche zumindest im wesentlichen gleich groß ist, wie eine Tiefe (21), in welcher im Stutzen (4) ein Anschlag (18) von der axialen Stirnfläche (19) des Stutzens (4) beabstandet angeordnet ist.

6. Anordnung nach Anspruch 5, dadurch gekennzeichnet, daß die Innenfläche des Stutzens (4) von der axialen Stirnfläche (19) bis zum Anschlag (18), welcher vorzugsweise als Ringbund ausgebildet ist, einen im wesentlichen gleich bleiben den Innendurchmesser (50) aufweist.

7. Anordnung nach einem der Ansprüche 1 bis 6, dadurch gekennzeichnet, daß der Stutzen (4) und die daran anzuschließende Abzweigleitung im wesentlichen in der gleichen horizontalen Ebene wie die Achse (8) des Rohres (4) angeordnet sind.

8. Anordnung nach einem der Ansprüche 1 bis 6, dadurch gekennzeichnet, daß eine zweite Halbschale (10) vorgesehen ist, mit welcher das Sattelstück (2) auf dem Rohr (34) befestigbar ist, und daß die zweite Halbschale (10) eine Grundplatte (44) aufweist und mit dieser einen Hydrantenfuß bildet, wobei in dem Stutzen (4) ein mittels der Heizwendel (16) verbundenes Anschlußteil (46) vorgesehen ist, welches einen Flansch (48) aufweist.

## Claims

1. Arrangement comprising a connecting-piece fitting which can be fastened by means of a saddle piece (2) on an outer surface of a pipe (34), in particular by welding, including a connecting piece (4) which is preferably orthogonal to the longitudinal axis (8) of the pipe (34) and has a heating coil (16), by means of which a branch conduit can be connected to the connecting piece (4) coaxially with the connecting-piece axis (6), characterised in that the heating coil (16) is arranged directly in the inner surface (17) of the connecting piece (4), in that the connecting piece (4) has on the outside a centring or a stop face (33, 27) for coaxially aligning a tapping device with respect to the connecting-piece axis (6), and in that a protective pipe (40) is provided which can be introduced into the connecting piece (4) before the tapping device is connected to the latter and with which, during the tapping of the pipe (34), a defined distance is preset between the outer surface of the borer introduced through the free end of the protective pipe (40) and the heating coil (16), it being possible for the protective pipe (40), as well as the tapping device, to be removed from the connecting piece (4) after the tapping of the pipe (34).

2. Arrangement according to Claim 1, characterised in that the centring or stop face (33, 27) is arranged on a centring collar (28, 29) of the connecting piece (4).

3. Arrangement according to Claim 2, characterised in that the centring collar (28, 29) has an external thread (30).

4. Arrangement according to one of Claims 1 to 3, characterised in that the heating coil (16) protrudes at least partially from the inner surface (17) of the connecting piece (4) for direct bearing on the outer surface of a branch conduit.

5. Arrangement according to one of Claims 1 to 4, characterised in that the protective pipe (40) has a length (41) which is at least substantially equal to a depth (21) at which, in the connecting piece (4), a stop (18) is arranged spaced from the axial end face (19) of the connecting piece (4).

6. Arrangement according to Claim 5, characterised in that the inner surface of the connecting piece (4) has a substantially constant inside diameter (50) from the axial end face (19) up to the stop (18), which is preferably designed as an annular collar.

7. Arrangement according to one of Claims 1 to 6, characterised in that the connecting piece (4) and the branch conduit to be joined thereto are arranged substantially in the same horizontal plane as the axis (8) of the pipe (4).

8. Arrangement according to one of Claims 1 to 6, characterised in that a second half-shell (10) is provided, by which the saddle piece (2) can be fastened on the pipe (34), and in that the second half-shell (10) has a base plate (44) and with this forms a hydrant base, there being provided in the connecting piece (4) a joining part (46) which is connected by means of the heating coil (16) and has a flange (48).

## Revendications

1. Installation avec embout de dérivation, qui peut être fixée au moyen d'une pièce en forme de selle (2), en particulier par soudure, sur la surface extérieure d'un tube (34), comprenant un embout (4) de préférence orthogonal à l'axe longitudinal (8) du tube (34), embout qui présente un filament chauffant (16) au moyen duquel une conduite de dérivation peut être reliée à l'embout (4) de manière coaxiale à l'axe (6) de l'embout, caractérisée en ce que l'embout (4) présente à l'extérieur une surface de centrage ou de butée (33, 27) pour l'alignement coaxial d'un appareil de perçage par rapport à l'axe (6) du manchon, et en ce qu'un tube de protection (40) est prévu qui, avant la liaison de l'appareil de perçage avec l'embout (4), peut être introduit dans ce dernier et avec lequel, lors du perçage du tube (34), une distance définie est imposée entre la surface extérieure du foret, introduit à travers l'extrémité libre du tube protecteur (40) et le filament chauffant (16), le tube protecteur (40) pouvant être retiré après le perçage du tube (34), de même que l'appareil de perçage peut être retiré de l'embout (4).

2. Installation selon la Revendication 1, ***caractérisée en ce que*** la surface de centrage ou de butée (33, 27) est placée sur un collier de centrage (28, 29) de l'embout (4).

3. Installation selon la Revendication 2, ***caractérisée en ce que*** la collier de centrage (28, 29) présente un filetage extérieur (30).

4. Installation selon l'une des Revendications 1 à 3, ***caractérisée en ce que*** le filament chauffant (16) dépasse au moins partiellement au-dessus de la surface intérieure (17) de l'embout (4) pour se placer en appui direct contre la surface extérieure d'une conduite de dérivation.

5. Installation selon l'une des Revendications 1 à 4, ***caractérisée en ce que*** le tube de protection (40) présente une longueur (41) qui est au moins pour l'essentiel aussi grande qu'une profondeur (21) de laquelle, dans l'embout (4), une butée (18) est placée à distance de la surface frontale axiale (19) de l'embout (4).

6. Installation selon la Revendication 5, ***caractérisée en ce que*** la surface intérieure de l'embout (4), de la surface frontale axiale (19) à la butée (18), laquelle est conformée de préférence en collier annulaire, présente un diamètre intérieur (50) pour l'essentiel constant

7. Installation selon l'une des Revendications 1 à 6, ***caractérisée en ce que*** l'embout (4) et la conduite de dérivation qui s'y raccorde sont placés pour l'essentiel dans le même plan horizontal que l'axe (8) du tube (34).

8. Installation selon l'une des Revendications 1 à 6, ***caractérisée en ce* qu**'une deuxième demi-coque (10) est prévue, avec laquelle la pièce en forme de selle (2) se fixe sur le tube (34), et en ce que la deuxième demi-coque (10) présente une plaque de base 44) et forme avec celle-ci un pied de bouche d'incendie, une pièce de raccordement (46) reliée au moyen du filament chauffant (16) étant prévue dans l'embout (4), laquelle présente une bride (48).
